# EUROPÄISCHE PATENTSCHRIFT

(11) **EP 1 874 845 B1**
(45) Veröffentlichungstag und Bekanntmachung des Hinweises auf die Patenterteilung: **27.08.2008**
(21) Anmeldenummer: 06725695.8
(22) Anmeldetag: 11.04.2006
(51) Int. Cl.: C08G 63/82, C08G 63/08

(54) **VERFAHREN ZUR HERSTELLUNG VON POLYHYDROXYALKANOATEN**
METHOD FOR PRODUCING POLYHYDROXYALKANOATES
PROCEDE DE PRODUCTION DE POLYHYDROXYALCANOATES

(30) Priorität: 12.04.2005 DE 102005017049
(43) Veröffentlichungstag der Anmeldung: 09.01.2008
(73) Patentinhaber: BASF SE, 67056 Ludwigshafen (DE)
(72) Erfinder: PREISHUBER-PFLÜGL, Peter, 67061 Ludwigshafen (DE); MOLNAR, Ferenc, 67346 Speyer (DE)
(86) Internationale Anmeldenummer: PCT/EP2006/061501
(87) Internationale Veröffentlichungsnummer: WO 2006/108829

(56) Entgegenhaltungen:
- WO-A-00/09463
- US-A- 5 625 029
- BIN WU, ROBERT W. LENZ: "Stereoregular Polymerization of [R,S]-3-Butyrolactone Catalyzed by Alumoxane-Monomer Adducts" MACROMOLECULES, Bd. 31, 1998, Seiten 3473-3477, XP002399981 in der Anmeldung erwähnt

## Beschreibung

Die Erfindung betrifft ein Verfahren zur Herstellung von Polyhydroxyalkanoaten durch Polymerisation von Laktonen der allgemeinen Formel I, 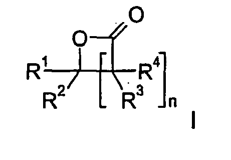 wobei die Substituenten und der Index n die folgende Bedeutung haben:
- n: die Zahlen 1 bis 4;
- R¹, R², R³,R⁴: unabhängig voneinander Wasserstoff, C₁-C₁₂-Alkyl, C₂-C₈-Alkenyl, C₃-C₈ Cycloalkyl, C₆-C₁₂-Aryl, C₈-C₁₂-Aryl-C₁-C₃-alkyl, Halogen, Nitro, C₁-C₆-Alkoxy; C₆-C₁₂-Aryloxy, Amino, C₁-C₆-Alkylamino, Di-(C₁-C₆-alkyl)amino, Di-(C₁-C₆-alkyl)phosphino, C₁-C₆-Alkylsulfinyl, C₁-C₆-Alkylsulfonyl;
- zwei an benachbarten Ringkohlenstoffen:
- sitzende Reste R¹ bis R⁴ gemeinsam C₁-C₅-Alkylen;: wobei R¹ bis R⁴ ihrerseits wieder durch R^{x} substituiert sein können, und R^{x} für ein bis drei Reste ausgewählt aus Halogen, Cyano, Nitro, C₁-C₆-Alkoxy, C₁-C₆-Alkylthio, Di-(C₁-C₆-alkyl)amino, C₆-C₁₂-Aryloxy, C₆-C₁₂-Aryl-C₁-C₃-alkoxy, C₁-C₆-Alkoxycarbonyl, C₆-C₁₂-Aryloxycarbonyl, C₆-C₁₂-Aryl-C₁-C₃-alkoxycarbonyl, C₁-C₆-Alkylcarbonyl, C₆-C₁₂-Arylcarbonyl, C₆-C₁₂-Aryl-C₁-C₃-alkylcarbonyl, C₁-C₆-Alkylsulfinyl, C₆-C₁₂-Arylsulfinyl, C₆-C₁₂-Aryl-C₁-C₃-alkylsulfinyl, C₁-C₆-Alkylsulfonyl, C₆-C₁₂₋Arylsulfonyl, C₆-C₁₂-Aryl-C₁-C₃-alkylsulfonyl steht;
- i): in Gegenwart mindestens eines Katalysators der Formel (II) LₗM^{a}X^{a}ₘ, wobei die Substituenten und Indices die folgende Bedeutung haben:
- M^{a}: Chrom
- X^{a}: ein Anion ausgewählt aus der Gruppe bestehend aus Halogenid, Sulfat, Sulfit, Nitrat, Nitrit, Carboxylat, Hydroxid, Alkoholat, Thiolat, Phosphat, Sulfonat, Borat, Phenolat, Antimonat, Cobaltat und Ferrat,
- L: ein Ligand ausgewählt aus der Gruppe bestehend aus Imin, Amin, Phosphan, Ylid, Carbonyl, Nitril, Ester, Ether, Sulfid, Amid, Cyclopentadienyl, ansa-Verbindungen, Alkoxid, Phenoxid, Carboxylat, Thiolat, Imid, Sulfonat, Porphyrin, Phthalocyanin, Oxazolin, Salen und Schiff-Base-Verbindungen, wobei auch verschiedene Liganden L miteinander verbunden sein können, und die Liganden L substituiert sein können,
- l, m: ganze Zahlen von 1 bis 10, die derart gewählt sind, dass die Verbindung der allgemeinen Formel II ladungsneutral ist;
- ii): gegebenenfalls in Gegenwart einer Aktivatorverbindung B ausgewählt aus unsubstituierten oder substituierten Pyridinen, Imidazolen, Triazolen, Carbenen, Phosphinen und ionischen Verbindungen der allgemeinen Formel (III) X^{b}ₒY_{p,} in der die Substituenten und Indices die folgende Bedeutung haben:
- X^{b}: ein Kation ausgewählt aus der Gruppe bestehend aus H⁺, Na⁺, K⁺, Li⁺, Mg²⁺, Ca²⁺, Al³⁺, NR₄⁺, Pyridinium, Imidazolium, PR₄⁺, AsR₄⁺ und N[PR₃)]₂⁺, wobei R die Bedeutung Wasserstoff, C₁-C₆-Alkyl oder C₆-C₁₂-Aryl hat;
- Y: ein Anion ausgewählt aus der Gruppe bestehend aus Halogenid, Carboxylat, Dicarboxylat, Tricarboxylat, Polycarboxylat, Sulfonat, Sulfonyl, Sulfat, Sulfinylat, Phosphat, Phosphit, Hydroxid, Alkoholat, Dialkoholat, Trialkoholat, Polyalkoholat, Thiolat, Acyl, Carbonat, Carbamat, Antimonat und Borat;
- o, p: ganze Zahlen von 1 bis 10000, die derart gewählt sind, dass die Verbindung der allgemeinen Formel III ladungsneutral ist;
- iii): gegebenenfalls in Gegenwart einer Lewis-Säure C der allgemeinen Formel (IV) L_{q}M^{c}Xᵣ^{c},wobei die Substituenten und Indices die folgende Bedeutung haben:
- M^{c}: ein Metall ausgewählt aus der Gruppe bestehend aus Mg, Ca, Sc, Y, Seltenerde-Element, Ti, V, Mn, Fe, Co, Ni, Cu, Zn, Al, Ga, Zr, Nb, Ru, Rh, Pd, Ag, Cd, In, Hf, Ta, Re, Os, Ir, Pt, Au, Hg, Tl und Pb,
- X^{c}: ein Anion ausgewählt aus der Gruppe bestehend aus Halogenid, Sulfat, Sulfit, Nitrat, Nitrit, Carboxylat, Thiolat, Phosphat, Sulfonat, Borat, Hydroxid, Alkoholat, Phenolat, Antimonat, Cobaltat und Ferrat,
- L: ein Ligand ausgewählt aus der Gruppe bestehend aus Imin, Amin, Phosphan, Ylid, Carbonyl, Nitril, Ester, Ether, Sulfid, Amid, Cyclopentadienyl, ansa-Verbindungen, Alkoxid, Phenoxid, Carboxylat, Thiolat, Imid, Sulfonat, Porphyrin, Phthalocyanin, Oxazolin, Salen und Schiff-Base-Verbindungen, wobei auch verschiedene Liganden L miteinander verbunden sein können, und die Liganden L substituiert sein können,
- q, r: ganze Zahlen von 1 bis 10, die derart gewählt sind, dass die Verbindung der allgemeinen Formel IV ladungsneutral ist.

Polyhydroxyalkanoate sind interessante Polymere, die sich für zahlreiche Polymeranwendungen eignen. Insbesondere sind stereoreguläre Polyhydroxyalkanoate, die sich durch Polymerisation von chiralen Laktonen gewinnen lassen interessant, da sich durch die Stereostruktur des Polymers die Eigenschaften geradezu maßschneidern lassen.

Ein Beispiel für einen Polyester, welcher mit unterschiedlicher Stereostruktur und damit unterschiedlichen Eigenschaften hergestellt werden kann, ist Poly(3-hydroxybutyrat).

Hochisotaktisches Poly(3-hydroxybutyrat), welches biochemisch hergestellt werden kann, zeigt einen Schmelzpunkt von 170-180C. Eine thermoplastische Verarbeitung muss bei Temperaturen erfolgen, bei welcher bereits der thermische Abbau des Polymers beginnt. Ataktisches Poly(3-hydroxybutyrat) hingegen weist keinen Schmelzpunkt, sondern nur einen Glasspunkt bei ca. 5°C auf. Dadurch ist dieses Polymer für thermoplastische Eigenschaften nicht interessant (siehe WO-A 94/00506).

In US 5440007 und US 6545112 ist die Herstellung von Poly-beta-propioestern mit bevorzugt syndiotaktischer Struktur beschrieben. Dazu werden metallorganische Zinnverbindungen als Katalysatoren eingesetzt. Das Polymer weist einen Schmelzpunkt von ca. 60°C auf.

In Macromolecules 1988, 21, 2657, 163 ist die Polymerisation von racemischem beta-Butyrolakton mit Trialkylaluminium/Wasser-Systemen zu isotaktischem Poly(3-hydroxybutyrat) beschrieben. Dabei werden kristalline Polymere mit einem Schmelzpunkt zwischen 159°C und 163°C erhalten.

Aus Macromolecules 1996, 29, 8683 und Macromolecules 1998, 31, 3473 ist die Polymerisation von racemischem beta-Butyrolakton mit Aluminoxan zu isotaktischem Poly(3-hydroxybutyrat) bekannt. Das Polymer wurde fraktioniert und das höchstschmelzende Polymer hat einen Schmelzpunkt von 166°C.

In den obengenannten Aluminium-katalysierten Verfahren sind für eine gute Aktivität sehr hohe Konzentrationen an Katalysator notwendig. Dadurch ergeben sich sehr hohe Anteile an anorganischen Verbindungen im Polymer, wodurch eine aufwendige und kostenintensive Aufreinigung des Polymers notwendig ist. Darüber hinaus sind die Kosten für die Polymerisationskatalysatoren sehr hoch, was letztlich zu sehr hohen Herstellkosten führt und das System wirtschaftlich nicht interessant macht.

Schließlich liefern die bekannten Verfahren des Standes der Technik ausgehend von chiralen Laktonen entweder ataktisches oder syndiotaktisches Polyhydroxyalkanoat mit sehr niedrigem Schmelzpunkt oder isotaktisches Polyhydroxyalkanoat mit zu hohem Schmelzpunkt, nahe an der beginnenden thermischen Zersetzungstemperatur des Polymers.

Die Aufgabe bestand demnach darin, ein Verfahren bereitzustellen, das die obengenannten Nachteile nicht aufweist und die Synthese von bevorzugt isotaktischem Polyhydroxyalkanoat (Anteil an isotaktischen Diaden von 55 bis 90%) mit hohem Molekulargewicht ermöglicht.

Das eingangs beschriebene Verfahren löst überraschend die Aufgabe.

Im folgenden wird das erfindungsgemäße Verfahren näher beschrieben.

Als Ausgangsmaterial zur Herstellung der Polyhydroxyalkanoate sind insbesondere Laktone geeignet.

Die Laktone sind handelsüblich oder können auf an sich bekannte Weise erhalten werden. Einzige Methoden zur Synthese von Laktonen sind in Tetrahedron 1999, 55, 6403 oder Chem. Eur. J. 2003, 9, 1273 beschrieben.

Die Synthese von stereoregulären Polyhydroxyalkanoaten geht entsprechend von chiralen Laktonen aus. Man kann in diesen Fällen racemische Laktongemische (ohne Enantiomerenüberschuss) oder enantiomerenangereicherte Laktone (R- oder S-Enantiomer im Überschuss) einsetzen.

Bevorzugt wird ein racemisches Laktongemisch eingesetzt.

Als einzusetzende Laktone eignen sich insbesondere β-Laktone, γ-Laktone, δ-Laktone und ε-Laktone der allgemeinen Formel I, 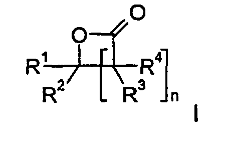 wobei die Substituenten und der Index n die folgende Bedeutung haben:
- n: die Zahlen 1 bis 4;
- R¹, R², R³,R⁴: unabhängig voneinander Wasserstoff, C₁-C₁₂-Alkyl, C₂-C₈-Alkenyl, C₃-C₈ Cycloalkyl, C₆-C₁₂-Aryl, C₆-C₁₂-Aryl-C₁-C₃-alkyl, Halogen, Nitro, C₁-C₆-Alkoxy, C₆-C₁₂-Aryloxy, Amino, C₁-C₆-Alkylamino, Di-(C₁-C₆-alkyl)amino, Di-(C₁-C₆-alkyl)phosphino, C₁-C₆-Alkylsulfinyl, C₁-C₆-Alkylsulfonyl;
- zwei an benachbarten Ringkohlenstoffen:
- sitzende Reste R¹ bis R⁴ gemeinsam C₁-C₅-Alkylen;: wobei R¹ bis R⁴ ihrerseits wieder durch R^{x} substituiert sein können, und R^{x} für ein bis drei Reste ausgewählt aus Halogen, Cyano, Nitro, C₁-C₆-Alkoxy, C₁-C₆-Alkylthio, Di-(C₁-C₆-alkyl)amino, C₆-C₁₂-Aryloxy, C₆-C₁₂-Aryl-C₁-C₃-alkoxy, C₁-C₆-Alkoxycarbonyl, C₆-C₁₂-Aryloxycarbonyl, C₆-C₁₂-Aryl-C₁-C₃-alkoxycarbonyl, C₁-C₆-Alkylcarbonyl, C₆-C₁₂-Arylcarbonyl, C₆-C₁₂-Aryl-C₁-C₃-alkylcarbonyl, C₁-C₆-Alkylsulfinyl, C₆-C₁₂-Arylsulfinyl, C₆-C₁₂-Aryl-C₁-C₃-alkylsulfinyl, C₁-C₆-Alkylsulfonyl, C₆-C₁₂-Arylsulfonyl, C₆-C₁₂-Aryl-C₁-C₃-alkylsulfonyl;

Geeignete Reste R¹ bis R⁴ sind beispielsweise C₁₋₁₂-Alkyl wie Methyl, Ethyl, i- oder n-Propyl, i-, n- oder t-Butyl, n-Pentyl oder n-Hexyl; C₂₋₈-Alkenyl wie beispielsweise Prop-1-enyl oder But-2-enyl; C₃₋₈-Cycloalkyl wie Cyclopropyl, Cyclobutyl, Cyclopentyl oder Cyclohexyl; C₆₋₁₂-Aryl wie Phenyl oder Naphthyl, und C₆-C₁₂-Aryl-C₁-C₃-alkyl wie Benzyl. Die Reste R¹ bis R⁴ können auch über ein Heteroatom an den Laktonring gebunden sein wie die Reste: Chlorid; Bromid, Fluorid, Dimethylamino, Methoxy oder Phenoxy. Dabei können zwei Reste R, falls sie sich an verschiedenen C-Atomen des Laktonrings befinden, miteinander verbrückt sein und für C₁-C₅-Alkylenrest wie einen Ethylen- oder Propylen-Rest stehen. Die Reste R¹ bis R⁴ können ihrerseits substituiert sein, beispielsweise mit den Gruppen Chlor, Brom, Methyl, Methoxy, Cyano, Methoxycarbonyl.

Geeignete Laktone sind beispielsweise:
β-Laktone: β-Propiolakton, β-Butyrolakton, Diketen, 4-Ethyl-oxetan-2-on, 4-Propyloxetan-2-on, 4-lsopropyl-oxetan-2-on, 4-Phenyl-oxetan-2-on, 4,4-Dimethyl-oxetan-2-on, 4,4-Diethyl-oxetan-2-on, 4,4-Diphenyl-oxetan-2-on, 3,4-Dimethyl-oxetan-2-on, 3,4-Diphenyl-oxetan-2-on, 7-Oxa-bicyclo[4.2.0]octan-8-on; γ-Laktone: γ-Butyrolakton, γ-Valerolakton, 3-Methyl-dihydro-furan-2-on, 3,4-Dimethyl-dihydro-furan-2-on ; δ-Laktone: δ-Valerolakton, 5,6-Dimethyl-tetrahydro-pyran-2-on ; ε-Laktone: ε-Caprolakton, ε-4-Methylcaprolakton;
Insbesondere bevorzugt ist β-Butyrolakton.

Das Lakton kann vorgereinigt werden. Eine Möglichkeit ist hier das Wasser durch Zugabe von einem Molsieb oder Destillation über Calciumhydrid zu entfernen. Auf eine weitere Vorreinigung wie z.B. einer Behandlung mit basischen Verbindungen zur Säureabtrennung kann im allgemeinen verzichtet werden.

Als Katalysator (in den Ansprüchen, siehe Komponente i) sind Verbindungen der Formel (II) LₗM^{a}X^{a}ₘ geeignet, wobei die Substituenten und Indices die folgende Bedeutung haben:
- M^{a}: Chrom,
- X^{a}: ein Anion ausgewählt aus der Gruppe bestehend aus Halogenid, Sulfat, Sulfit, Nitrat, Nitrit, Carboxylat, Thiolat, Phosphat, Sulfonat, Borat, Hydroxid, Alkoholat, Phenolat, Antimonat, Cobaltat und Ferrat,
- L: ein Ligand ausgewählt aus der Gruppe bestehend aus Imin, Amin, Phosphan, Ylid, Carbonyl, Nitril, Ester, Ether, Sulfid, Amid, Cyclopentadienyl, ansa-Verbindungen, Alkoxid, Phenoxid, Carboxylat, Thiolat, Imid, Sulfonat, Porphyrin, Phthalocyanin, Oxazolin, Salen und Schiff-Base-Verbindungen, wobei auch verschiedene Liganden L miteinander verbunden sein können, und die Liganden L substituiert sein können,
- l, m: ganze Zahlen von 1 bis 10, die derart gewählt sind, dass die Verbindung der allgemeinen Formel II ladungsneutral ist;

Diese Verbindungen haben entweder a priori eine koordinative Untersättigung, oder sie können unter den Reaktionsbedingungen der erfindungsgemäßen Polymerisation einen Ligand, Lösungsmittel oder Wasser (reversibel) abspalten, sodass bei den Reaktionsbedingungen eine koordinative Untersättigung entsteht. Die Katalysatoren binden bevorzugt Liganden, die nicht an der Reaktion teilnehmen, aber eine steuernde Wirkung auf die Polymerisation ausüben. Die Ligandmetalleinheiten können chiral sein.

Bevorzugte Anionen X sind Chlorid, Bromid, Iodid, Tetrafluoroborat, Hexafluoroantimonat, Hexafluorophosphat, Sulfonat, Hydroxid, Carboxylat und Alkoxid, beispielsweise Dinitrophenolat.

Bevorzugte Liganden sind Porphyrin, Phthalocyanin und Salen, besonders bevorzugt Salen.

Salen-Strukturen können durch Kondensation von Diaminen und Aldehyden oder Ketonen hergestellt werden. Die Carbonylverbindungen können dabei gleich oder verschieden sein.

Salene haben die allgemeine Formel

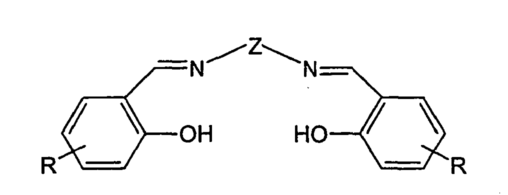

Als Beispiele für Diamine Z(NH₂)₂, die sich zum Aufbau von Salenen eignen, seien angeführt:

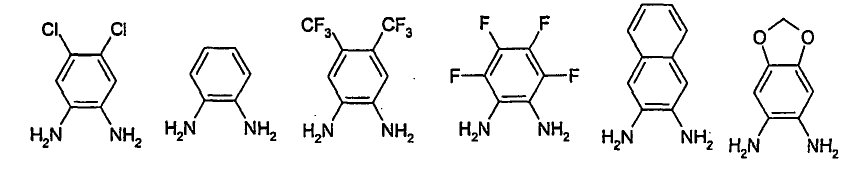

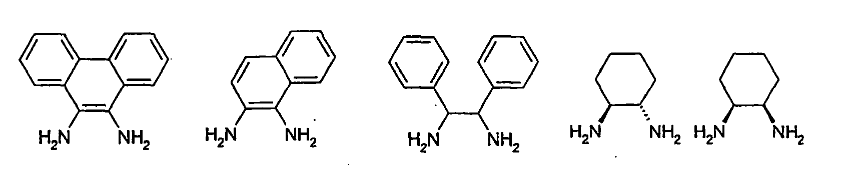

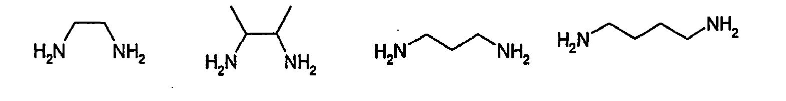

Als Beispiele für Aldehyde seien angeführt:

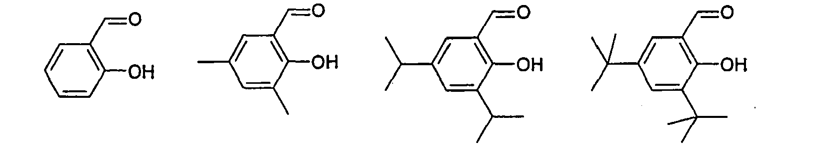

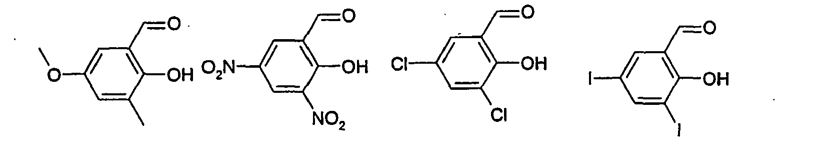

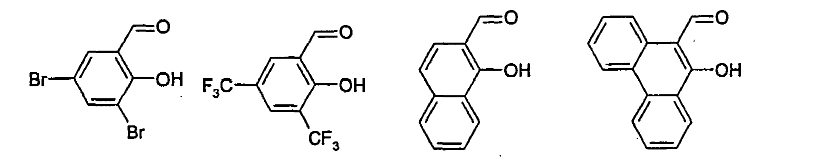

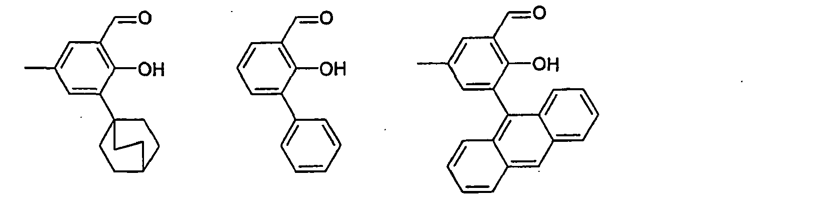

Weitere Salenliganden können durch Kondensation von Ketonen und Diaminen hergestellt werden.

Die Liganden können in ihrer enantiomeren reinen Form eingesetzt werden.

Geeignete Salene sind z.B.
(1 R,2R)-[1,2-Cyclohexandiamino-N,N'-bis-3,5-di-t-butylsalicyliden],
(1 S,2S)-[1,2-Cyclohexandiamino-N,N'-bis-3,5-di-iodosalicyliden],
1,2-Phenylendiamino-N,N'-bis-3,5-di-t-butylsalicyliden] und
[4,5-Dichlor-1,2-phenylendiamino-N,N'-bis-3,5-di-t-butylsalicyliden]

Als Liganden L bevorzugte Oxazoline sind z.B.
1,2-Bis(2,4-dimethyl-2-oxazolin-2-yl)ethan,
(S,S)-2,2'-Bis(4-benzyl-2-oxazolin),
(S,S)-2,2'-(2,6-Pyridinediyl)bis(4-isopropyl-2-oxazolin),
(S,S)-(-)-2,2'-(Dimethylmethylen)bis(4-tert-butyl-2-oxazolin), und
(4R,5S,4'R,5'S)-2,2'-Methylen-bis(4,5-diphenyl-2-oxazolin).

Als Liganden L bevorzugte Schiff-Base-Verbindungen - auch als Azomethine bezeichnet, Kondensationsprodukte aus Aldehyden oder anderen Carbonylverbindungen und primären Aminen - sind beispielsweise
(1R,2S)-[1-[(3,5-Di-tert-butyl-2-hydroxy-benzyliden)amino]indan-2-ol],
(1R,2S)-[1-[(3-Adamantyl-2-hydroxy-5-methyl-benzyliden)amino]indan-2-ol],
(1S,2R)-[1-[(3-Adamantyl-2-hydroxy-5-methyl-benzyliden)amino]indan-2-ol], und
(1R,2S)-[1-[(3-Adamantyl-2-hydroxy-5-methyl-benzyliden)amino]-1,2-diphenylethan-2-ol.

Als Liganden L bevorzugte Phosphane sind beispielsweise:
(2S,4S)-(-)-(Diphenylphosphino)-2-(Diphenylphosphinomethyl)pyrrolidin,
(R)-(+)-2,2'-bis(Diphenylphosphino)-1,1'-binaphthyl (Binap),
R-(+)-1,2-Bis(diphenylphosphino)propan,
(4R,5R)-(-)-o-Isopropylide-n-2,3-dihydroxy-1,4-bis(diphenylphosphino)butan (Diop),
(1 S,2S)-(+)-1,2-Bis(diphenyl-phosphinomethyl)cyclohexan,
(-)-(R)-N,N-Dimethyl-1-[(S)-1',2-Bis(diphenylphosphino)-ferrocenyl]ethylamin,
(2R,3R)-(+)-Bis(diphenylphosphino)butan,
(+)-1,2-Bis[(2S,5S)-2,5-Dimethylphospholano]benzol,
(S)-1 ((R)-1',2-Bis(diphenylphosphino)ferrocenyl)ethanol,
(R)-(-)-1-[(S)-2-(Diphenylphosphino)ferrocenyl]ethyldicyclohexylphosphin, und
(1S,2S)-(+)-1,2-Bis[(n-diphenylphosphino)amino]cyclohexan).

Unter den bei dem Liganden L genannten ansa-Verbindungen (auch als Cyclophane bezeichnet) werden aromatische Verbindungen verstanden, die von einer aliphatischen Kette überbrückt werden.

Außerdem sind auch Ethylen-bis(4,5,6,7-tetrahydro-1-indenyl), Binaphthol und Aminosäuren als Liganden L geeignet.

Geeignete weitere Liganden sind dem Fachmann bekannt aus der Katalyse mit homogenen metallorganischen. Verbindungen.

Bevorzugte Katalysatoren der Formel II sind z.B.
(1R,2R)-[1,2-Cyclohexandiamino-N,N'-bis-3,5-di-t-butylsalicyliden]chrom(III)chlorid,
[1,2-Phenylendiamino-N,N'-bis-3,5-di-t-butylsalicyliden]chrom(III)chlorid,
[4,5-Dichlor-1,2-Phenylendiamino-N,N'-bis-3,5-di-t-butylsalicyliden]-chrom(III)chlorid,
und (1R,2S)-[1-[(3-Adamantyl-2-hydroxy-5-methyl-benzyliden) amino]indan-2-ol]chrom(III)chlorid.

Die Herstellung der Katalysatoren II ist dem Fachmann bekannt und auch in der WO-A 00/09463 beschrieben. Im übrigen sind zahlreiche Verbindungen II auch kommerziell erhältlich.

Selbstverständlich können auch Mischungen verschiedener Katalysatoren eingesetzt werden. Die Katalysatoren können ein- oder mehrkernig sein.

Der Katalysator kann zusätzlich eine Aktivatorverbindung B enthalten, welche ausgewählt ist aus unsubstituierten oder substituierten Pyridinen, Imidazolen, Triazolen, Carbenen, Phosphinen und ionischen Verbindungen der allgemeinen Formel (III) X^{b}ₒYₚ, in der die Substituenten und Indices die folgende Bedeutung haben:
- X^{b}: ein Kation ausgewählt aus der Gruppe bestehend aus H⁺, Na⁺, K⁺, Li⁺, Mg²⁺, Ca²⁺, Al³⁺, NR₄⁺, Pyridinium, Imidazolium, PR₄⁺, AsR₄⁺, und N[PR₃)]₂⁺, wobei R die Bedeutung Wasserstoff, C₁-C₆-Alkyl oder C₆-C₁₂-Aryl hat;
- Y: ein Anion ausgewählt aus der Gruppe bestehend aus Halogenid, Carboxylat, Dicarboxylat, Tricarboxylat, Polycarboxylat, Sulfonat, Sulfonyl, Sulfat, Sulfinylat, Phosphat, Phosphit, Hydroxyid, Alkoholat, Dialkoholat, Trialkoholat, Polyalkoholat, Sulfid, Acyl, Carbonat, Carbamat, Antimonat uns Borat;
- o, p: ganze Zahlen von 1 bis 10000, die derart gewählt sind, dass die Verbindung der allgemeinen Formel III ladungsneutral ist.

Vorzugsweise steht X für NR₄⁺ oder Pyridinium und Y für Chlorid, Carboxylat, Dicarboxylat oder Tricarboxylat. Es kann ein Gemisch von verschiedenen Aktivatorverbindungen III zugefügt werden. Der Einsatz von polyfunktionellen Carboxylaten führt zu verzweigten Strukturen und einem höheren Molekulargewicht.

Gegebenenfalls kann dem Katalysatorsystem auch eine Lewis-Säure C der allgemeinen Formel L_{q}M^{c}X^{c}ᵣ(IV) zugesetzt werden, wobei die Substituenten und Indices die folgende Bedeutung haben:
- M^{c}: ein Metall ausgewählt aus der Gruppe bestehend aus Mg, Ca, Sc, Y, Seltenerde-Element, Ti, V, Mn, Fe, Co, Ni, Cu, Zn, Al, Ga, Zr, Nb, Ru, Rh, Pd, Ag, Cd, In, Hf, Ta, Re, Os, Ir, Pt, Au, Hg, Tl und Pb,
- X^{c}: ein Anion ausgewählt aus der Gruppe bestehend aus Halogenid, Sulfat, Sulfit, Nitrat, Nitrit, Carboxylat, Hydroxid, Alkoholat, Thiolat, Phosphat, Sulfonat, Borat, Phenolat, Antimonat, Cobaltat und Ferrat,
- L: ein Ligand ausgewählt aus der Gruppe bestehend aus Imin, Amin, Phosphan, Ylid, Carbonyl, Nitril, Ester, Ether, Sulfid, Amid, Cyclopentadienyl, ansa-Verbindungen, Alkoxid, Phenoxid, Carboxylat, Thiolat, Imid, Sulfonat, Porphyrin, Phthalocyanin, Oxazolin, Salen und Schiff-Base-Verbindungen, wobei auch verschiedene Liganden L miteinander verbunden sein können, und die Liganden L substituiert sein können,
- q, r: ganze Zahlen von 1 bis 10, die derart gewählt sind, dass die Verbindung der allgemeinen Formel IV ladungsneutral ist.

Die Menge des Katalysators (II) im Reaktionsgemisch liegt üblicherweise im Bereich von 0,0001 bis 100, bevorzugt von 0,001 bis 5, besonders bevorzugt von 0,001 bis 0,5 mol-%, bezogen auf die eingesetzte Lakton-Menge.

Die Menge der Aktivatorverbindung (III) im Reaktionsgemisch liegt üblicherweise im Bereich von 0,0001 bis 100, bevorzugt von 0,001 bis 5, besonders bevorzugt von 0,001 bis 0,5 mol%, bezogen auf die eingesetzte Lakton-Menge.

Die Menge der Lewis-Säure C (IV) im Reaktionsgemisch liegt üblicherweise im Bereich von 0,0001 bis 100, bevorzugt von 0,001 bis 5, besonders bevorzugt von 0,001 bis 0,5 mol-%, bezogen auf die eingesetzte Lakton-Menge.

Die Verbindungen II und III werden im Verhältnis 1:10000 bis 10000:1, bevorzugt 1:100 bis 10000:1, besonders bevorzugt 1:1 bis 1000:1 eingesetzt.

Die Verbindungen II und IV werden im Verhältnis 1:10000 bis 10000:1, bevorzugt 1:1000 bis 1000:1, besonders bevorzugt 1:100 bis 100:1 eingesetzt.

Die Laktone können mit weiteren reaktiven Monomeren wie beispielsweise den folgenden cyclischen Verbindungen copolymerisiert werden: Lactide, Glycoside, Lactame, Dioxepandione, Epoxide, Aziridine, Carbonate oder Anhydride.

Mit Hilfe des erfindungsgemäßen Verfahrens lassen sich Copolymere mit 0,01-99,9% Comonomer, bevorzugt 1-30%, besonders bevorzugt 5-20% Comonomeranteil herzustellen.

Die Molekulargewichte der Polyester liegen zwischen 500 und 5.000.000, bevorzugt zwischen 50.000 und 3.000.000.

Die Molmassen der Polymere können durch geeignete Verbindungen geregelt werden. Dazu eigenen sich z.B. Alkohole, Diole, Amine, Carbonsäuren.

Niedermolekulare Polyhydroxyalkanoate können als Macromonomere eingesetzt werden. Mit Hilfe beispielsweise von Kettenverlängerern wie Isocyanaten lassen sich höhere Molekulargewichte aufbauen.

Mit Hilfe des erfindungsgemäßen Verfahrens lassen sich weiterhin verzweigte oder vernetze Polymere herstellen. Beispielsweise kann ein vernetztes Polymer durch den Einsatz polyfunktioneller Epoxide oder ein verzweigtes Polymer mit polyfunktionellen Ammoniumcarboxylats als Aktivatorverbindung III erhalten werden (siehe WO-A 94/00506).

Das erfindungsgemäße (Polymerisations)Verfahren kann mit oder ohne Zusatz von Lösungsmitteln durchgeführt werden. Als Lösungsmittel kommen alle gängigen Lösungsmittel in Frage. Die Polymerisation erfolgt vorzugsweise ohne Lösungsmittel.

Die Polymerisation kann als Schmetzpolymerisation durchgeführt werden. Dabei wird oberhalb des Erweichungspunktes des Polymers polymerisiert.

Die Polymerisation kann als Lösungspolymerisation durchgeführt werden. Dabei wird ein Lösungsmittel gewählt, in welchem das Polymer unter Polymerisationsbedingungen löslich ist.

Die Polymerisation kann als Fällungspolymerisation durchgeführt werden. Dabei wird ein Lösungsmittel gewählt, in welchem das Monomer löslich und das Polymer unter Polymerisationsbedingungen unlöslich ist.

Die Polymerisation kann in superkritischen Gasen oder ionischen Flüssigkeiten durchgeführt werden.

Das erfindungsgemäße Verfahren wird in der Regel bei Temperaturen von -100 und 250°C, vorzugsweise 0-180°C, besonders bevorzugt 60-140°C durchgeführt.

Das Verfahren kann bei erhöhtem Druck durchgeführt werden, jedoch arbeitet man bevorzugt bei Normaldruck. Als Druckgas kann beispielsweise Stickstoff, Argon, Kohlenmonoxid, Kohlendioxid, Ethylen oder Propylen eingesetzt werden.

Das erfindungsgemäße Verfahren kann sowohl batchweise (diskontinuierlich) als auch kontinuierlich durchgeführt werden.

Der Katalysator II und gegebenenfalls die Verbindungen III und IV können nach der Polymerisation aus dem Polymer entfernt werden. Unter Umständen kann es ratsam sein lediglich die Verbindungen II bis IV nur teilweise und lediglich eine oder zwei der Verbindungen aus dem Polymer zu entfernen.

Eine Möglichkeit ist hier, eine oder mehrere der Verbindungen so auszuwählen, dass sie nach der Reaktion in eine sich vom Polymer trennende Phase übergehen. Ein Beispiel für eine Abtrennung eines Katalysators mittels einer fluorhältigen Phase wurde in J. Am. Chem. Soc., 1998, 120, 3133 beschrieben. Dazu können beispielsweise Katalysatoren II mit fluorhaltigen Seitengruppen verwendet werden.

Eine weitere Möglichkeit ist, eine oder mehrere der Verbindungen I bis III auf einem Trägermaterial zu verankern um eine einfachere Abtrennung des Katalysatorsystems vom Polymer zu ermöglichen. Als geeignete Trägermaterialien können Silika, Aluminumoxid, Aktivkohle oder vernetztes Polystyrol dienen.

Das Trägermaterial kann so ausgewählt werden, dass es während der Reaktion im Monomer oder Polymer löslich ist und bei geänderter Temperatur unlöslich wird.

Die Verbindungen I bis III können über ionische Wechselwirkungen oder kovalent an das Trägermaterial gebunden sein. Alternativ hierzu können die Verbindungen I bis III erst nach der Polymerisation an das Trägermaterial gebunden werden und so aus dem Polymer entfernt werden.

Die Verbindungen I bis III können schließlich vom Trägermaterial wieder entfernt werden und einer erneuten Reaktion zugeführt werden. Als eine Möglichkeit seien hier ionische Wechselwirkungen der Verbindungen I bis III mit lonentauschem angeführt

Die durch dieser Verfahren erhaltenen Polymere können in ihrer reinen Form oder als Blend eingesetzt werden.

In der Regel enthalten Blends von 1 bis 99 Gew.-% des durch das erfindungsgemäße Verfahren hergestellten Polymers, vorzugsweise 5-85 Gew.-% und besonders bevorzugt 20-70 Gew.-%.

Das Polymer kann beispielsweise mit unterschiedlichen Polyhydroxyalkanoaten geblendet werden. Es eignen sich hierzu insbesondere biochemisch hergestellte oder syndiotaktische Polyhydroxyalkanoate. Als weitere Blendmaterialen kommen beispielsweise Polyether, Celluloseester, Stärke, modifizierte Stärke, Polyester, Polyesterether, Polyvinylalkohol oder Polyacrylate in Frage. Bevorzugte Polyether sind Polyethylenoxid und Polypropylenoxid. Bevorzugte Polyester sind aliphatische, aromatische oder aliphatisch-aromatische Polyester. Besonders bevorzugte Polyester sind Polymilchsäure und hochisotaktisches Poly(3-hydroxybutyrat) und dessen Copolymere.

Die mittels dieses Verfahren erhaltenen Polymere können für die Herstellung von bioabbaubaren Materialen eingesetzt werden.

In einer vorteilhaften Ausführungsform des Verfahrens wird das Lakton in einem vorgeschalteten Schritt ausgehend von Oxiran (Epoxid) und Kohlenmonoxid in Gegenwart eines Carbonylisierungskatalysators V hergestellt und ohne Zwischenisolierung des Laktons zum Polyhydroxyalkanoat umgesetzt.

Weiterhin können neben dem Carbonylisierungskatalysators V eine oder mehrere Verbindungen der im Polymerisationsschritt verwendeten Verbindungen ausgewählt aus der Gruppe Katalysator II, Aktivatorverbindung III und Lewis-Säure IV, die wie eingangs definiert bereits bei der Laktonherstellung zugegen sein oder alternativ nach der Laktonbildung zugegeben werden.

Die als Carbonylierungskatalysator V verwendeten Übergangsmetallkomplexe sind neutrale (Vn) oder anionische (Va) Komplexe.

Als neutrale Komplexe Vn eignen sich alle neutralen Komplexverbindungen auf der Basis der Metalle der Gruppen 5 bis 11 des PSE, in denen das Zentralmetall die Formalladung null trägt. Geeignete Metalle sind zum Beispiel V, Ru, Cr, Mo, W, Mn, Re, Fe, Os, Co, Ir, Rh und Ni. Besonders bevorzugt sind Re, Co, Ru, Rh, Fe, Ni, Mn, Mo, W oder Gemische davon, insbesondere Co.

Im neutralen Komplex Vn liegen die Liganden in der Regel als Neutralliganden vor. Die Anzahl der Liganden hängt vom jeweiligen Metall ab und richtet sich nach der koordinativen Absättigung des übergangsmetalls im Grundzustand. Geeignete Neutralliganden sind zum Beispiel der Kohlenmonoxid-, Nitro-, Nitroso-, Carbonat-, Ether-, Sulfoxid-, Amid-, Nitril-, Phosphit- oder Phosphinligand. Diese Liganden sind im allgemeinen über ein freies Elektronenpaar koordinativ an das Übergangsmetall gebunden. Bevorzugt wird Kohlenmonoxid als Ligand eingesetzt.

Es können in einem neutralen Komplex Vn auch unterschiedliche Liganden nebeneinander vorliegen, wie in Co₂(CO)₆(PMe₂Ph)₂. Bevorzugt kommen als Komplexe A in Betracht: Co₂(CO)₈, Ru₃(CO)₁₂, Rh₄(CO)₁₂, Rh₆(CO)₁₆, CO₄(CO)₁₂, Fe₂(CO)₁₀, Fe₂(CO)₉, Ni(CO)₄, Mn₂(CO)₁₀, Mo(CO)₆ und W(CO)₆ oder deren Mischungen. Besonders bevorzugt sind Ru₃(CO)₁₂, Co₄(CO)₁₂, Co(CO)₃(NO), Ni(CO)₄ und Mn₂(CO)₁₀, insbesondere CO₂(CO)₈.

Die Herstellung der neutralen Komplexe Vn ist dem Fachmann bekannt und findet sich zum Beispiel bei F.G. Stone, E.W. Abel und G.Wilkinson, "Comprehensive Organometallic Chemistry - The Synthesis, Reactions and Structures of Organometallic Compounds", Pergamon Press, Oxford, 1982, zum Beispiel in Vol. 5, beschrieben. Solche Komplexe können auch in situ generiert werden, siehe EP-A 0 577 206. Im übrigen sind solche Komplexe auch kommerziell erhältlich.

Anionische Komplexe Va im Sinne der vorliegenden Erfindung sind solche Verbindungen, in denen mindestens ein Zentralmetall oder eine Ligandeneinheit über eine negative Formalladung verfügt. Geeignete anionische Komplexe Va verfügen über ein Zentralmetall (in der Formel (Va) weiter unten als M_{β} bezeichnet) aus den Gruppen 5 bis 11, bevorzugt aus den Gruppen 8 bis 10 des PSE. Als Metalle kommen beispielsweise Co, Fe, Rh und Ru in Frage, bevorzugt Co, Ru und Rh zum Einsatz. Co ist besonders bevorzugt.

Im anionischen Komplex Va liegen die Liganden üblicherweise ebenfalls als Neutralliganden vor. Die Anzahl der Liganden hängt vom jeweiligen Metall ab und richtet sich nach der koordinativen Absättigung des Übergangsmetalls im Grundzustand. Geeignete Neutralliganden sind zum Beispiel der Kohlenmonoxid-, Nitro-, Nitroso-, Carbonat-, Ether-, Sulfoxid-, Amid-, Nitril-, Phosphit oder Phosphinligand. Diese Liganden sind im allgemeinen über ein freies Elektronenpaar koordinativ an das Übergangsmetall gebunden. Bevorzugt wird Kohlenmonoxid als Ligand eingesetzt.

Es können im anionischen Komplex Va auch unterschiedliche Liganden nebeneinander vorliegen, zum Beispiel [P(Ph)₃]Co(-1)(CO)₃, [P(Me₂Ph)]Co(-1)(CO)₃, Co(-1)(CO)₃(CNPh). Auch diese Verbindungen lassen sich in situ generieren.

Als Carbonylierungskatalysator werden bevorzugt Übergangsmetallkomplexe der allgemeinen Formel (Va) eingesetzt

(M_{α}⁽ⁿ⁺⁾)ₘ[M_{β}(L*)₄]ₚ(Va)

mit der Bedeutung
- M_{β}: Übergangsmetall der 8. bis 10. Gruppe des Periodensystems der Elemente mit der Formalladung -1 oder -2,
- L*: Ligand ausgewählt aus PR₃, P(OR)₃, NR₃, SR₂, OR₂, CO, NO, R-CN, R-NO₂, (RO)(R'O)C = O, (R)(R')C = O, (R)C = O(OR'),
- M_{α}: Metall der 1. oder 2. Gruppe des Periodensystems der Elemente, Zn oder Hg, Bis(triarylphosphin)iminium, Imidazolium, Pyridinium, Pyrrolidinium, Guanidinium, Isouronium, Trityl oder T(R)₄ mit
- T: N, P oder As,
- R, R': unabhängig voneinander Wasserstoff, Alkyl, Aryl, Alkaryl oder Aralkyl,
- n, m: 1 oder 2,
- p: n **•** m für Formalladung M_{β} von -1 oder n • m/2 für Formalladung M_{β} von -2.

Als Reste R bzw. R' kommen zum Beispiel Wasserstoff, geradkettiges oder verzweigtes C₁- bis C₁₀-Alkyl wie Methyl, Ethyl, n- oder i-Propyl, n-, i- oder t-Butyl oder n- oder i-Pentyl, C₆- bis C₁₄-Aryl wie Phenyl oder Naphthyl oder Alkylaryl mit 1 bis 10 C-Atomen im Alkyl- und 6 bis 14 C-Atomen im Arylteil wie Benzyl in Frage. Geeignete aromatische Reste umfassen auch Heterocyclen und stellen zum Beispiel fünf- oder sechsgliedrige Monocyclen wie Pyridyl und Phenyl, sowie annellierte Systeme wie Anthracen dar.

Als metallische Kationen M_{α} kommen u.a. Alkali- und Erdalkalikationen in Betracht. Bevorzugt wird auf Lithium, Natrium, Kalium und/oder Cäsium zurückgegriffen.

Unter den nichtmetallischen Kationen M_{α} sind Tetraphenyl-, Tetramethyl-, Tetraethyl- und Tetra-n-butyl-ammonium, -phosphonium und -arsenium, Bis(triarylphosphin)iminium, Imidazolium, Pyridinium, Pyrrolidinium, Guanidinium oder Isouroniumbevorzugt. Besonders geeignete Arylreste im Bis(triarylphosphin)iminium-Kation sind Phenyl und Naphthyl, wobei Bis(triphenylphosphin)iminium bevorzugt ist.

Bevorzugt sind die anionischen Komplexe Va ausgewählt aus der Gruppe enthaltend Li[Co(CO)₄], Na[Co(CO)₄], K[Co(CO)₄], Cs[Co(CO)₄], (R₄N)[Co(CO)₄], (R₄P)[Co(CO)₄], (R₄As)[Co(CO)₄], (PPN)[Co(CO)₄], Li[Rh(CO)₄], Na[Rh(CO)₄]; K[Rh(CO)₄], Cs[Rh(CO)₄], (R₄N)[Rh(CO)₄], (R₄P)[Rh(CO)₄], (R₄As)[Rh(CO)₄], (PPN)[Rh(CO)₄], Li[Ir(CO)₄], Na[Ir(CO)₄], K[Ir(CO)₄], Cs[Ir(CO)₄], (R₄N)[Ir(CO)₄], (RᵣP)[Ir(CO)₄], (R₄As)[Ir(CO)₄], (PPN)[Ir(CO)₄], Li₂[Fe(CO)₄], Na₂[Fe(CO)₄], K₂[Fe(CO)₄], Cs₂[Fe(CO)₄], (R₄N)₂[Fe(CO)₄], (R₄P)₂[Fe(CO)₄], (R₄AS)₂[Fe(CO)₄], (PPN)₂[Fe(CO)₄], (PPN)[HFe(CO)_{4]} und (PPN)₂[Fe₂(CO)₈], wobei R Methyl, Ethyl, n- oder i-Propyl, n-, i- oder t-Butyl, Phenyl oder Benzyl bedeutet.

Unter den anionischen Komplexen Va mit Cobalt in der Oxidationsstufe -1 sind Tetraphenylphosphonium-, Tetraphenylarsenium-,Tetraphenylammonium-, Tetraethylphosphonium-, Tetraethylarsenium-, Tetraethylammonium-, Imidazolium-, Pyridinium, Pyrrolidinium-, Guanidinium- und Isouronium- tetracarbonylcobaltat, sowie Natriumtetracarbonylcobaltat besonders bevorzugt. Besonders bevorzugt ist Na[Co(CO)₄].

Die Herstellung der anionischen Komplexe ist dem Fachmann bekannt. Geeignete Herstellverfahren finden sich zum Beispiel bei F.G. Stone, E.W. Abel und G. Wilkinson, "Comprehensive Organometallic Chemistry - The Synthesis, Reactions and Structures of Organometallic Compounds", Pergamon, Oxford, 1982 und F.G. Stone, E.W. Abel und G. Wilkinson, "Comprehensive Organometallic Chemistry II - A Review of the Literature 1982 -1994", Pergamon Press, Oxford, zum Beispiel in Vol. 8, beschrieben. Im übrigen sind solche Komplexe auch kommerziell erhältlich.

Selbstverständlich können auch Mischungen verschiedener neutraler und/oder anionischer Komplexe V eingesetzt werden. Die Komplexe können ein- oder mehrkernig sein.

Die Menge der Komplexe V im Reaktionsgemisch liegt üblicherweise im Bereich von 0,01 bis 10000, bevorzugt von 0,1 bis 100, besonders bevorzugt von 0,2 bis 10 mol%, gerechnet als Summe aller neutralen und anionischen Übergangsmetallkomplexe V und bezogen auf die eingesetzte Epoxid-Menge.

Die Komplexe V können auch in Form einer ionischen Flüssigkeit eingesetzt werden. Dabei stellen sie gleichzeitig auch das Lösungsmittel und Reaktionsmedium dar. Die Menge an Komplex V bezogen auf die eingesetzte Lakton-Menge kann hier in großem Überschuss vorliegen. Diese ionischen Flüssigkeiten sind kommerziell erhältlich, z.B. 1-Butyl-3-methylimidazolium cobalttetracarbonyl.

### Beispiele:

Die verwendeten Chemikalien stammen von Fa. Fluka, Aldrich bzw. Merck, sofern nicht anders angegeben, und wurden ohne weitere Reinigung eingesetzt. Die Lösungsmittel wurden mit Molekularsieb getrocknet und vor Verwendung jeweils entgast und mit N₂ gesättigt. Das β-Butyrolakton wurde über Calciumhydrid getrocknet, destilliert und über Molekularsieb gelagert.

### Salen Cr1: 1,2-Phenylendiamin-N,N'-bis(3,5-di-t-butylsalicyliden)]chrom(III) chlorid

Der Salenligand wurde durch Kondensation von 20,3 mmol ortho-Phenylendiamin und 42,6 mmol 3,5-Di-tert.-butyl-2-hydroxybenzaldehyd in Ethanol - wie in WO 00/09463 beschrieben - synthetisiert.

9,7 mmol Ligand und 11,6 mmol Chrom(II)chlorid wurden in 120 ml Tetrahydrofuran bei Raumtemperatur 5 Stunden unter Stickstoffatmosphäre gerührt.-Anschließend wurde der Ansatz 12 Stunden unter Luftatmosphäre gerührt. Nach Zugabe von 23,2 mmol 2,6-Lutidin wurde der Ansatz weitere 3 Stunden unter Stickstoffatmosphäre gerührt. Anschließend wurden 450 ml tert.-Butyl-methyl-ether zugegeben, die Mischung wurde drei Mal mit 150 ml gesättigter wässriger Ammoniumchloridlösung und zwei Mal mit gesättigter wässriger NaCl-Lösung ausgeschüttelt. Die organische Phase wurde mit Natriumsulfat getrocknet, das Natriumsulfat abfiltriert und nach Abziehen des Lösungsmittels im Vakuum getrocknet.

### Salen Cr2: 4,5-Dichlor-1,2-phenylendiamin-N,N'-bis(3,5-di-t-butylsalicyliden)] chrom(III) chlorid

Der Salenligand wurde durch Kondensation von 5 mmol 4,5-Dichlor-ortho-Phenylendiamin und 10,4 mmol 3,5-Di-tert.-butyl-2-hydroxybenzaldehyd in 50 ml Ethanol synthetisiert. 2,5 mmol Ligand und 3 mmol Chrom(II)chlorid wurden in 50 ml THF bei Raumtemperatur 5 Stunden unter Stickstoffatmosphäre gerührt. Anschließend wurde der Ansatz 12 Stunden unter Luftatmosphäre gerührt. Nach Zugabe von 6 mmol 2,6-Lutidin wurde der Ansatz weitere 3 Stunden unter Stickstoffatmosphäre gerührt. Anschließend wurden 100 ml tert.-Butyl-methyl-ether zugegeben, die Mischung wurde drei Mal mit 25 ml) gesättigter wässriger Ammoniumchloridlösung und zwei Mal mit gesättigter wässriger NaCl-Lösung ausgeschüttelt. Die organische Phase wird mit Natriumsulfat getrocknet, das Natriumsulfat abfiltriert und nach Abziehen des Lösungsmittels im Vakuum getrocknet.

Die Isotaktizität wurde mittels ¹³C-NMR-Spektroskopie bestimmt. Dazu wurde die in Macromolecules 1989, 22, 1656 beschriebene Methode verwendet und die beiden Peaks der isotaktischen und syndiotaktischen Diaden im Carbonylbereich bei 169 ppm integriert.

### Polymerisationsversuche:

### Beispiel 1:

15,5 ml racemisches ß-Butyrolakton wurden in einem 250 ml Glaskolben vorgelegt. Anschließend wurden 39 mg Salen *Cr1* zugegeben und der Ansatz auf 100°C erwärmt. Nach 20 Stunden wurde der Ansatz gekühlt und eine Probe für die Umsatzbestimmung mittels ¹H-NMR-Spektroskopie entnommen. Anschließend wurde das Polymer in Hexan/Ether ausgefällt und getrocknet. Das getrocknete Polymer wurde mittels ¹³C-NMR-Spektroskopie charakterisiert.
Der Umsatz betrug 92%, der Anteil an isotaktischen Diaden 69%.

### Polymercharakterisierung:

Die thermischen Eigenschaften des Polymer aus Beispiel 1 wurden mittels DSC (Differential Scanning Calorimetry) untersucht. Die Aufheizrate betrug 20°/min. Im ersten Heizlauf wurde ein Glaspunkt von -10°C und Schmelzpunkte bei 121 und 141 °C gefunden. In einem zweiten Heizlauf nach Abkühlung auf-30°C mit 20°/min wurde ein Glaspunkt von 0°C und Schmelzpunkte von 112 und 142°C gefunden.

Das Molekulargewicht des Polymers wurde mittels Größenausschlusschromatographie in Hexafluorisopropanol (Säulentemperatur 40°C, Kalibrierung mit PMMA-Standard) bestimmt. Dabei ergab sich ein Zahlenmittel von 20.000 Dalton und ein Gewichtsmittel von 136.000 Dalton.

Das Polymer wurde durch Fällung in Methanol fraktioniert und der Schmelzpunkt des ausgefällten Polymer ermittelt. Die Aufheizrate betrug 20°/min. Im ersten Heizlauf wurden breite Schmelzpunkte bei 117 und 145°C gefunden. In einem zweiten Heizlauf nach Abkühlung auf -30°C mit 20°/min wurde ein Glaspunkt von 3°C und Schmelzpunkte von 123 und 146°C gefunden.

### Beispiel 2:

15,5 ml einer Mischung aus 60% R- und 40% S-ß-Butyrolakton wurden in einem 250 ml Glaskolben vorgelegt. Anschließend wurden 118 mg Salen *Cr1* zugegeben und der Ansatz auf 100°C erwärmt. Nach 16 Stunden wurde der Ansatz gekühlt und eine Probe für die Umsatzbestimmung mittels ¹H-NMR-Spektroskopie entnommen. Anschließend wurde das Polymer in Hexan/Ether ausgefällt und getrocknet. Das getrocknete Polymer wurde mittels ¹³C-NMR-Spektroskopie charakterisiert.
Der Umsatz betrug 60%, der Anteil an isotaktischen Diaden 74%.

### Beispiel 3:

15,5 ml racemisches β-Butyrolakton wurden in einem 250 ml Glaskolben vorgelegt. Anschließend wurden 118 mg von Salen *Cr1* und 5 mg Tetrabutylammoniumchlorid zugegeben und der Ansatz auf 100°C erwärmt. Nach 16 Stunden wurde der Ansatz gekühlt und eine Probe für die Umsatzbestimmung mittels ¹H-NMR-Spektroskopie entnommen. Anschließend wurde das Polymer in Hexan/Ether ausgefällt und getrocknet. Das getrocknete Polymer wurde mittels ¹³C-NMR-Spektroskopie charakterisiert.
Der Umsatz beträgt 85%, der Anteil an isotaktischen Diaden 64%.

### Beispiel 4:

15,5 ml racemisches beta-Butyrolakton wurden in einem 250 ml Glaskolben vorgelegt. Anschließend wurden 131 mg Salen *Cr2* zugegeben und der Ansatz auf 100°C erwärmt. Nach 20 Stunden wurde der Ansatz gekühlt und eine Probe für die Umsatzbestimmung mittels ¹H-NMR-Spektroskopie entnommen. Anschließend wurde das Polymer in Hexan/Ether ausgefällt und getrocknet.
Der Umsatz betrug 82%, der Anteil an isotaktischen Diaden 57%.

Die thermischen Eigenschaften des Polymer aus Beispiel 4 wurden mittels DSC (Differential Scanning Calorimetry) untersucht. Die Aufheizrate betrug 20°/min. Im ersten Heizlauf wurde ein Glaspunkt von 5°C und breite Schmelzpunkte bei 91 und 126°C gefunden. In einem zweiten Heizlauf nach Abkühlung auf -30°C mit 20°/min wurde ein Glaspunkt von 6°C und ein breiter Schmelzbereich mit Maximum bei 135°C gefunden.

Das Molekulargewicht des Polymers wurde mittels Größenausschlusschromatographie in Hexafluorisopropanol (Säulentemperatur 40°C, Kalibrierung mit PMMA-Standard) bestimmt. Dabei ergab sich ein Zahlenmittel von 132.000 Dalton und ein Gewichtsmittel von 660.000 Dalton.

## Patentansprüche

1. Verfahren zur Herstellung von Polyhydroxyalkanoaten durch Polymerisation von Laktonen der allgemeinen Formel I, 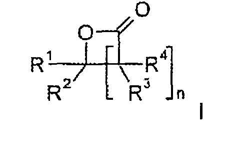 wobei die Substituenten und der Index n die folgende Bedeutung haben:
n die Zahlen 1 bis 4;
R¹, R², R³,R⁴ unabhängig voneinander Wasserstoff, C₁-C₁₂-Alkyl, C₂-C₈-Alkenyl, C₃-C₈ Cycloalkyl, C₆-C₁₂-Aryl, C₆-C₁₂-Aryl-C₁-C₃-alkyl, Halogen, Nitro, C₁-C₆-Alkoxy, C₆-C₁₂-Aryloxy, Amino, C₁-C₆-Alkylamino, Di-(C₁-C₆-alkyl)amino, Di-(C₁-C₆-alkyl)phosphino, C₁-C₆-Alkylsulfinyl, C₁-C₆-Alkylsulfonyl;
zwei an benachbarten Ringkohlenstoffen sitzende Reste R¹ bis R⁴ gemeinsam C₁-C₅-Alkylen; wobei R¹ bis R⁴ ihrerseits wieder durch R^{x} substituiert sein können, und R^{x} für ein bis drei Reste ausgewählt aus Halogen, Cyano, Nitro, C₁-C₆-Alkoxy, C₁-C₆-Alkylthio, Di-(C₁-C₆-alkyl)amino, C₆-C₁₂-Aryloxy, C₆-C₁₂-Aryl-C₁-C₃-alkoxy, C₁-C₆-Alkoxycarbonyl, C₆-C₁₂-Aryloxycarbonyl, C₆-C₁₂-Aryl-C₁-C₃-alkoxycarbonyl, C₁-C₆-Alkylcarbonyl, C₆-C₁₂-Arylcarbonyl, C₆-C₁₂-Aryl-C₁-C₃-alkylparbonyl, C₁-C₆-Alkylsulfinyl, C₆-C₁₂-Arylsulfinyl, C₆₋C₁₂-Aryl-C₁-C₃-alkylsulfinyl, C₁-C₆-Alkylsulfonyl, C₆-C₁₂-Arylsulfonyl, C₆-C₁₂-Aryl-C₁-C₃-alkylsulfonyl steht;
i) in Gegenwart mindestens eines Katalysators der Formel (II) LₗM^{a}X^{a}ₘ, wobei die Substituenten und Indices die folgende Bedeutung haben:
M^{a} Chrom,
X^{a} ein Anion ausgewählt aus der Gruppe bestehend aus Halogenid, Sulfat, Sulfit, Nitrat, Nitrit, Carboxylat, Hydroxid, Alkoholat, Thiolat, Phosphat, Sulfonat, Borat, Phenolat, Antimonat, Cobaltat und Ferrat,
L ein Ligand ausgewählt aus der Gruppe bestehend aus Imin, Amin, Phosphan, Ylid, Carbonyl, Nitril, Ester, Ether, Sulfid, Amid, Cyclopentadienyl, ansa-Verbindungen, Alkoxid, Phenoxid, Carboxylat, Thiolat, Imid, Sulfonat, Porphyrin, Phthalocyanin, Oxazolin, Salen und Schiff-Base-Verbindungen, wobei auch verschiedene Liganden L miteinander verbunden sein können, und die Liganden L substituiert sein können,
l, m ganze Zahlen von 1 bis 10, die derart gewählt sind, dass die Verbindung der allgemeinen Formel II ladungsneutral ist;
ii) gegebenenfalls in Gegenwart einer Aktivatorverbindung B ausgewählt aus unsubstituierten oder substituierten Pyridinen, Imidazolen, Triazolen, Carbenen, Phosphinen und ionischen Verbindungen der allgemeinen Formel (III) X^{b}ₒYₚ, in der die Substituenten und indices die folgende Bedeutung haben:
X^{b} ein Kation ausgewählt aus der Gruppe bestehend aus H⁺, Na⁺, K⁺, Li⁺, Mg2⁺, Ca²⁺, Al³⁺, NR₄⁺, Pyridinium, Imidazolium, Pr₄⁺ AsR₄⁺ und N[PR₃)]₂⁺, wobei R die Bedeutung Wasserstoff, C₁-C₆-Alkyl oder C₆-C₁₂-Aryl hat;
Y ein Anion ausgewählt aus der Gruppe bestehend aus Halogenid, Carboxylat, Dicarboxylat, Tricarboxylat, Polycarboxylat, Sulfonat, Sulfonyl, Sulfat, Sulfinylat, Phosphat, Phosphit, Hydroxid, Alkoholat, Dialkoholat, Trialkoholat, Polyalkoholat, Thiolat, Acyl, Carbonat, Carbamat, Antimonat und Borat;
o, p ganze Zahlen von 1 bis 10000. die derart gewählt sind, dass die Verbindung der allgemeinen Formel III ladungsneutral ist;
iii) gegebenenfalls in Gegenwart einer Lewis-Säure C der allgemeinen Formel (IV) L_{q}M^{c}X^{c}ᵣ, wobei die Substituenten und Indices die folgende Bedeutung haben:
M_{c} ein Metall ausgewählt aus der Gruppe bestehend aus Mg, Ca, Sc, Y, Seltenerde-Element, Ti, V, Mn, Fe, Co, Ni, Cu, Zn, Al, Ga, Zr, Nb, Ru, Rh, Pd, Ag, Cd, In, Hf, Ta, Re, Os, Ir, Pt, Au, Hg, TI und Pb,
X^{c} ein Anion ausgewählt aus der Gruppe bestehend aus Halogenid, Sulfat, Sulfit, Nitrat, Nitrit, Imid, Carboxylat, Sulfid, Phosphat, Sulfonat, Borat, Hydroxid, Alkoholat, Phenolat, Antimonat, Cobaltat und Ferrat,
L ein Ligand ausgewählt aus der Gruppe bestehend aus Imin, Amin, Phosphan, Ylid, Carbonyl, Nitril, Ester, Ether, Sulfid, Amid, Cyclopentadienyl, ansa-Verbindungen, Alkoxid, Phenoxid, Carboxylat, Thiolat, Imid, Sulfonat, Porphyrin, Phthalocyanin, Oxazolin, Salen und Schiff-Base-Verbindungen, wobei auch verschiedene Liganden L miteinander verbunden sein können, und die Liganden L substituiert sein können,
q, r ganze Zahlen von 1 bis 10, die derart gewählt sind, dass die Verbindung der allgemeinen Formel IV ladungsneutral ist.

2. Verfahren nach Anspruch 1, wobei als Katalysator ein Chrom(111)salenkomplex der Formel II eingesetzt wird.

3. Verfahren nach den Ansprüchen 1 bis 2, durch Polymerisation von chiralen Laktonen der Formel I.

4. Verfahren nach Anspruch 3, durch Polymerisation eines Racemats von chiralen Laktonen.

5. Verfahren nach Anspruch 3 durch Polymerisation von β-Butyrolakton.

6. Verfahren nach den Ansprüchen 1 bis 5, **dadurch gekennzeichnet, dass** das Lakton in einem vorgeschalteten Schritt ausgehend von Oxiran und CO in Gegenwart eines Carbonylisierungskatalysators V hergestellt wird und ohne Zwischenisolierung des Laktons zum Polyhydroxyalkanoat umgesetzt wird.

7. Verfahren nach Anspruch 6, **dadurch gekennzeichnet, dass** das Lakton zusätzlich in Gegenwart einer oder mehrerer Verbindungen ausgewählt aus der Gruppe bestehend aus Katalysator II, Aktivatorverbindung III und Lewis-Säure IV, die wie in Anspruch 1 definiert sind hergestellt wird.

## Claims

1. A process for preparing polyhydroxyalkanoates by polymerization of lactones of the general formula I, 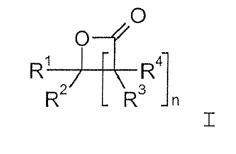 where the substituents and the index n have the following meanings:
n is from 1 to 4;
R¹, R², R³, R⁴ are each, independently of one another, hydrogen, C₁-C₁₂-alkyl, C₂-C₈-alkenyl, C₃-C₈-cycloalkyl, C₆-C₁₂-aryl, C₆-C₁₂-aryl-C₁-C₃-alkyl, halogen, nitro, C₁-C₆-alkoxy, C₆-C₁₂-aryloxy, amino, C₁-C₆-alkylamino, di(C₁-C₆-alkyl)amino, di (C₁-C₆-alkyl)phosphino, C₁-C₆-alkylsulfinyl, C₁-C₆-alkylsulfonyl;
two radicals R¹ to R⁴ located on adjacent ring carbons together form C₁-C₅-alkylene; where R¹ to R⁴ may in turn be substituted by R^{x} and R^{x} represents from one to three radicals selected from among halogen, cyano, nitro, C₁-C₆-alkoxy, C₁-C₆-alkylthio, di (C₁-C₆-alkyl)amino, C₆-C₁₂-aryloxy, C₆-C₁₂-aryl-C₁-C₃-alkoxy, C₁-C₆-alkoxycarbonyl, C₆-C₁₂-aryloxycarbonyl, C₆-C₁₂-aryl-C₁-C₃-alkoxycarbonyl, C₁-C₆-alkylcarbonyl, C₆-C₁₂-arylcarbonyl, C₆-C₁₂-aryl-C₁-C₃-alkylcarbonyl, C₁-C₆-alkylsulfinyl, C₆-C₁₂-arylsulfinyl, C₆-C₁₂-aryl-C₁-C₃-alkylsulfinyl, C₁-C₆-alkylsulfonyl, C₆-C₁₂-arylsulfonyl, C₆-C₁₂-aryl-C₁-C₃-alkylsulfonyl;
i) in the presence of at least one catalyst of the formula (II) LₗM^{a}X^{a}ₘ, where the substituents and indices have the following meanings:
M^{a} is chromium,
X^{a} is an anion selected from the group consisting of halide, sulfate, sulfite, nitrate, nitrite, carboxylate, hydroxide, alkoxide, thiolate, phosphate, sulfonate, borate, phenoxide, antimonate, cobaltate and ferrate,
L is a ligand selected from the group consisting of imine, amine, phosphane, ylide, carbonyl, nitrile, ester, ether, sulfide, amide, cyclopentadienyl, ansa compounds, alkoxide, phenoxide, carboxylate, thiolate, imide, sulfonate, porphyrin, phthalocyanine, oxazoline, salen and Schiff base compounds, with different ligands L also being able to be joined to one another and the ligands L being able to be substituted,
l, m are integers from 1 to 10 which are selected so that the compound of the general formula II is uncharged;
ii) if appropriate in the presence of an activator compound B selected from among unsubstituted or substituted pyridines, imidazoles, triazoles, carbenes, phosphines and ionic compounds of the general formula (III) X^{b}ₒYₚ, where the substituents and indices have the following meanings:
X^{b} is a cation selected from the group consisting of H⁺, Na⁺, K⁺, Li⁺, Mg²⁺, Ca²⁺, Al³⁺, NR₄⁺, pyridinium, imidazolium, PR₄⁺, AsR₄⁺ and N[PR₃)]₂⁺, where R is hydrogen, C₁-C₆-alkyl or C₆-C₁₂-aryl;
Y is an anion selected from the group consisting of halide, carboxylate, dicarboxylate, tricarboxylate, polycarboxylate, sulfonate, sulfonyl, sulfate, sulfinylate, phosphate, phosphite, hydroxide, alkoxide, dialkoxide, trialkoxide, polyalkoxide, thiolate, acyl, carbonate, carbamate, antimonate and borate;
o, pare integers from 1 to 10 000 which are selected so that the compound of the general formula III is uncharged;
iii) if appropriate in the presence of a Lewis acid C of the general formula (IV) L_{q}M^{c}X^{c}ᵣ, where the substituents and indices have the following meanings:
M^{c} is a metal selected from the group consisting of Mg, Ca, Sc, Y, rare earth elements, Ti, V, Mn, Fe, Co, Ni, Cu, Zn, Al, Ga, Zr, Nb, Ru, Rh, Pd, Ag, Cd, In, Hf, Ta, Re, Os, Ir, Pt, Au, Hg, TI and Pb,
X^{c} is an anion selected from the group consisting of halide, sulfate, sulfite, nitrate, nitrite, imide, carboxylate, sulfide, phosphate, sulfonate, borate, hydroxide, alkoxide, phenoxide, antimonate, cobaltate and ferrate,
L is a ligand selected from the group consisting of imine, amine, phosphane, ylide, carbonyl, nitrile, ester, ether, sulfide, amide, cyclopentadienyl, ansa compounds, alkoxide, phenoxide, carboxylate, thiolate, imide, sulfonate, porphyrin, phthalocyanine, oxazoline, salen and Schiff base compounds, with different ligands L also being able to be joined to one another and the ligands L being able to be substituted,
q, r are integers from 1 to 10 which are selected so that the compound of the general formula IV is uncharged.

2. The process according to claim 1, wherein a chromium(III)-salen complex of the formula II is used as catalyst.

3. The process according to either of claims 1 and 2 by polymerization of chiral lactones of the formula I.

4. The process according to claim 3 by polymerization of a racemate of chiral lactones.

5. The process according to claim 3 by polymerization of ß-butyrolactone.

6. The process according to any of claims 1 to 5, wherein the lactone is prepared from oxirane and CO in the presence of a carbonylation catalyst V in a preceding step and is converted into the polyhydroxyalkanoate without intermediate isolation of the lactone.

7. The process according to claim 6, wherein the lactone is prepared in the additional presence of one or more compounds selected from the group consisting of catalyst II, activator compound III and Lewis acid IV, as defined in claim 1.

## Revendications

1. Procédé de préparation de polyhydroxyalcanoates par polymérisation de lactones de formule générale I, 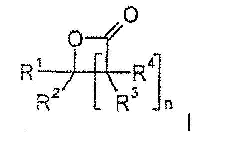 dans laquelle les substituants et l'indice n présentent les significations suivantes :
n représente les nombres de 1 à 4 ;
R¹, R², R³ R⁴ représentent, indépendamment les uns des autres, un atome d'hydrogène, un groupe alkyle en C₁-C₁₂, un groupe alcényle en C₂-C₈, un groupe cycloalkyle en C₃-C₈, un groupe aryle en C₆-C₁₂, un groupe C₆-C₁₂-aryl-C₁-C₃-alkyle, un atome d'halogène, un groupe nitro, un groupe alcoxy en C₁-C₆, un groupe aryloxy en C₆-C₁₂, un groupe amino, un groupe alkylamino en C₁-C₆, un groupe di- (C₁-C₆-alkyl) amino, un groupe di- (C₁-C₆-alkyl) phosphino, un groupe alkylsulfinyle en C₁-C₆, un groupe alkylsulfonyle en C₁-C₆ ;
deux radicaux R¹ à R⁴ situés sur des atomes de carbone du noyau voisins représentent conjointement un groupe alkylène en C₁-C₅ ; où R¹ à R⁴ peuvent, à leur tour, être à nouveau substitués par R^{x} et R^{x} représente un à trois radicaux choisis parmi un atome d'halogène, un groupe cyano, un groupe nitro, un groupe alcoxy en C₁-C₆, un groupe alkylthio en C₁-C₆, un groupe di-(C₁-C₆-alkyl)amino, un groupe aryloxy en C₆-C₁₂, un groupe C₆-C₁₂-aryl-C₁-C₃-alcoxy, un groupe C₁-C₆-alcoxycarbonyle, un groupe C₆-C₁₂-aryloxycarbonyle, un groupe C₆-C₁₂-aryl-C₁-C₃-alcoxycarbonyle, un groupe C₁-C₆-alkylcarbonyle, un groupe C₆-C₁₂-arylcarbonyle, un groupe C₆-C₁₂-aryl-C₁-C₃-alkylcarbonyle, un groupe alkylsulfinyle en C₁-C₆, un groupe arylsulfinyle en C₆-C₁₂, un groupe C₆-C₁₂-aryl-C₁-C₃-alkylsulfinyle, un groupe alkylsulfonyle en C₁-C₆, un groupe arylsulfonyle en C₆-C₁₂, un groupe C₆-C₁₂-aryl-C₁-C₃-alkylsulfonyle ;
i) en présence d'au moins un catalyseur de formule (II) L₁M^{a}X^{a}ₘ, dans laquelle les substituants et les indices présentent les significations suivantes :
M^{a} représente un atome de chrome,
X^{a} représente un anion choisi parmi le groupe constitué d'un halogénure, d'un sulfate, d'un sulfite, d'un nitrate, d'un nitrite, d'un carboxylate, d'un hydroxyde, d'un alcoolate, d'un thiolate, d'un phosphate, d'un sulfonate, d'un borate, d'un phénolate, d'un antimonate, d'un cobaltate et d'un ferrate,
L représente un ligand choisi parmi le groupe constitué d'une imine, d'une amine, d'un phosphane, d'un ylure, d'un carbonyle, d'un nitrile, d'un ester, d'un éther, d'un sulfure, d'un amide, d'un cyclopentadiényle, de composés ansa, d'un alcoxyde, d'un phénoxyde, d'un carboxylate, d'un thiolate, d'un imide, d'un sulfonate, d'une porphyrine, d'une phtalocyanine, d'une oxazoline, d'un salen et de composés base de Schiff, où divers ligands L peuvent également être liés les uns aux autres, et les ligands L peuvent être substitués,
l, m représentent des entiers de 1 à 10 qui sont choisis de telle sorte que le composé de formule générale II soit de charge neutre.
ii) éventuellement en présence d'un composé activateur B choisi parmi des composés, non substitués ou substitués, pyridine, imidazole, triazole, carbène, phosphine et des composés ioniques de formule générale (III) X^{b}ₒYₚ, dans laquelle les substituants et les indices présentent la signification suivante :
X^{b} représente un cation choisi parmi le groupe constitué d'un H⁺, d'un Na⁺, d'un K⁺, d'un Li⁺, d'un Mg²⁺, d'un Ca2⁺, d' un Al³⁺, d'un NR₄⁺, d'un pyridinium, d'un imidazolium, d'un PR₄⁺, d'un AsR₄⁺ et d'un N[PR₃)]₂⁺, dans lequel R représente un atome d'hydrogène, un groupe alkyle en C₁-C₆ ou un groupe aryle en C₆-C₁₂ ;
Y représente un anion choisi parmi le groupe constitué d'un halogénure, d'un carboxylate, d'un dicarboxylate, d'un tricarboxylate, d'un polycarboxylate, d'un sulfonate, d'un sulfonyle, d'un sulfate, d'un sulfinylate, d'un phosphate, d'un phosphite, d'un hydroxyde, d'un alcoolate, d'un dialcoolate, d'un trialcoolate, d'un polyalcoolate, d'un thiolate, d'un acyle, d'un carbonate, d'un carbamate, d'un antimonate et d'un borate ;
o, p représentent des entiers de 1 à 10 000, qui sont choisis de telle sorte que les composés de formule III soient de charge neutre ;
iii) éventuellement en présence d'un acide de Lewis C de formule (IV) L_{q}M^{c}X^{c}ᵣ, dans laquelle les substituants et les indices présentent la signification suivante :
M^{c} représente un métal choisi parmi le groupe constitué du Mg, du Ca, du Sc, du Y, d'un élément terre rare, du Ti, du V, du Mn, du Fe, du Co, du Ni, du Cu, du Zn, de l'Al, du Ga, du Zr, du Nb, du Ru, du Rh, du Pd, de l'Ag, du Cd, de l'In, du Hf, du Ta, du Re, de l'Os, de l'Ir, du Pt, de l'Au, de l'Hg, du Tl et du Pb,
X^{c} représente un anion choisi parmi le groupe constitué d'un halogénure, d'un sulfate, d'un sulfite, d'un nitrate, d'un nitrite, d'un imide, d'un carboxylate, d'un sulfure, d'un phosphate, d'un sulfonate, d'un borate, d'un hydroxyde, d'un alcoolate, d'un phénolate, d'un antimonate, d'un cobaltate et d'un ferrate,
L représente un ligand choisi parmi le groupe constitué d'une imine, d'une amine, d'un phosphane, d'un ylure, d'un carbonyle, d'un nitrile, d'un ester, d'un éther, d'un sulfure, d'un amide, d'un cyclopentadiényle, de composés ansa, d'un alcoxyde, d'un phénoxyde, d'un carboxylate, d'un thiolate, d'un imide, d'un sulfonate, d'une porphyrine, d'une phtalocyanine, d'une oxazoline, d'un salen et de composés base de Schiff, où divers ligands L peuvent également être liés les uns aux autres, et les ligands L peuvent être substitués,
q, r représentent des entiers de 1 à 10 qui sont choisis de telle sorte que le composé de formule générale IV soit de charge neutre.

2. Procédé selon la revendication 1, dans lequel on utilise, en tant que catalyseur, un complexe chrome (III)-salen de formule II.

3. Procédé selon les revendications 1 à 2, par polymérisation de lactones chirales de formule I.

4. Procédé selon la revendication 3, par polymérisation d'un racémate de lactones chirales.

5. Procédé selon la revendication 3, par polymérisation de la β-butyrolactone.

6. Procédé selon les revendications 1 à 5, **caractérisé en ce que** la lactone est préparée dans une étape en amont en partant de l'oxirane et du CO en présence d'un catalyseur de carbonylation V et mise à réagir sans isolation intermédiaire de la lactone pour donner lieu au polyhydroxyalcanoate.

7. Procédé selon la revendication 6, **caractérisé en ce que** la lactone est préparée en présence d'un ou de plusieurs composés choisis parmi le groupe constitué d'un catalyseur II, d'un composé activateur III et d'un acide de Lewis IV qui sont tels que définis dans la revendication 1.
